# EUROPÄISCHE PATENTANMELDUNG

(11) **EP 1 801 549 A2**
(43) Veröffentlichungstag der Anmeldung: **27.06.2007**
(21) Anmeldenummer: 06026745.7
(22) Anmeldetag: 22.12.2006
(51) Int. Cl.: G01F 23/284

(54) **Hohlleiter für ein Mikrowellen-Füllstandsmessgerät**

(30) Priorität: 22.12.2005 DE 202005020158 U
(71) Anmelder: Sailer, Josef, 87474 Buchenberg (DE)
(72) Erfinder: Sailer, Josef, 87474 Buchenberg (DE)
(74) Vertreter: Fiener, Josef

(57) **Zusammenfassung**

Zur Schaffung eines zuverlässigen und präzisen Messsystems zur Messung des Abstands bis zu einem Messmedium (z.B. 54), umfassend:
einen ein erstes Ende (12) und ein zweites Ende (14) aufweisenden Hohlleiter (10) zum Führen von elektromagnetischen Wellen bis zu dem Messmedium (54),
einen am ersten Ende (12) anbringbaren Sender (22) zum Aussenden einer modulierten elektromagnetischen Welle in den Hohlleiter (10),
einen am ersten Ende (12) anbringbaren Empfänger (24) zum Empfangen von aus dem Hohlleiter (10) kommenden elektromagnetischen Wellen, und
eine mit dem Empfänger (24) verbundene Auswerteeinheit (26) zum Ermitteln des Abstands bis zu dem Messmedium (54),
wird vorgeschlagen, dass in dem Hohlleiter (10) eine Störstelle (30) vorgesehen ist, die einen definierten Anteil der im Hohlleiter (10) geführten elektromagnetischen Welle zum Empfänger (24) zurück reflektiert, und die Auswerteeinheit (26) dafür ausgebildet ist, den Abstand bis zu dem Messmedium (54) durch Vergleich der von der Störstelle (30) reflektierten elektromagnetischen Welle und der vom Messmedium (54) reflektierten elektromagnetischen Welle zu ermitteln.

## Beschreibung

Die Erfindung betrifft ein Messsystem zur Messung des Abstands bis zu einem Messmedium gemäß dem Oberbegriff des Anspruchs 1.

Für Abstandsmessungen hat sich in den verschiedensten technischen Bereichen die Verwendung von Mikrowellen als vorteilhaft erwiesen. Ein unter Einsatz von Mikrowellen konzipiertes Abstandsmesssystem gemäß dem Oberbegriff des Anspruchs 1, das zur Pegelstandsmessung in transportierbaren Behältern verwendet wird, ist aus US 5,305,237 bekannt. Das untere Ende eines Hohlleiters für elektromagnetische Wellen hängt dabei in die Flüssigkeit, deren Pegel zu messen ist, und dessen Inneres steht in Fluidverbindung mit der zu messenden Flüssigkeit. Ein Sender sendet eine modulierte Mikrowelle durch den Hohlleiter bis zu der Flüssigkeit, an der die Welle zu einem Empfänger zurückreflektiert wird. Eine Auswerteeinheit ermittelt aus der ausgesendeten Welle und der reflektierten Welle den Pegelstand der Flüssigkeit. Damit sich nur ein bestimmter Mode in dem Hohlleiter ausbreiten kann, sind Modenauslöschungsplatten in dem Hohlleiter vorgesehen.

Der vorliegenden Erfindung liegt die Aufgabe zugrunde, das bekannte Messsystem zur verbessern und ein zuverlässig und präzise arbeitendes Messsystem mit verbesserter Messgenauigkeit zu schaffen.

Diese Aufgabe wird mit einem Messsystem zur Messung des Abstands bis zu einem Messmedium gemäß dem Anspruch 1 gelöst. Vorteilhafte Weiterbildungen der Erfindung sind Gegenstand der abhängigen Ansprüche.

Erfindungsgemäß ist es vorgesehen, in dem Hohlleiter eine Störstelle anzubringen, die einen bestimmten Anteil der im Hohlleiter zu dem Medium, bis zu dem der Abstand gemessen werden soll, geführten elektromagnetischen Welle reflektiert und diesen Anteil somit zum Empfänger zurück schickt. Der Empfänger kann diesen von der Störstelle reflektierten Teil als Referenzmarke bzw. Referenzsignal verwenden. Der von der Störstelle nicht reflektierte, sondern durchgelassene Anteil der elektromagnetischen Welle, der selbstverständlich immer größer als 0 sein muss, wird dann an dem Messmedium reflektiert und gelangt zurück zum Empfänger. Die Auswerteeinheit kann dann durch Frequenz- oder Phasenmessung bei einer frequenzmodulierten bzw. pulsmodulierten elektromagnetischen Welle den Abstand zwischen dem Messmedium und der Störstelle ermitteln, und zwar unabhängig von der Weglänge zwischen der Auswerteeinheit und der Störstelle. Hierdurch ist eine höhere Messgenauigkeit möglich. Das erfindungsgemäße Messsystem ist für einen Frequenzbereich von 100 MHz bis 100 GHz einsetzbar.

Für die Frequenzmodulation kommen je nach Anforderungen und Gegebenheiten verschiedene Modulationsarten wie das "Stepped-Frequency"-Verfahren, die lineare Frequenzmodulation oder nichtlineare wie z.B. eine sinusförmige Frequenzmodulation in Frage. Die Auswertung erfolgt dabei entweder durch einen Phasenvergleich zwischen hin- und rücklaufender Welle oder durch eine Frequenzmessung. Dabei sind die im Vergleich zum Freiraum unterschiedlichen Ausbreitungseigenschaften der Welle im Hohlleiter zu berücksichtigen.

Mit der Phasenmessung bzw. Phasenmodulation können abhängig von Parametern wie Messlängen, Qualität des Hohlleiters, Eigenschaften des zu messenden Mediums etc. Genauigkeiten im Millimeterbereich und darunter erreicht werden,

Für geringere Genauigkeitsanforderungen und lange Messstrecken ist auch eine Pulsmodulation möglich, wobei nach Absenden des Pulses die Zeitdifferenz der an der Störstelle und dem Messmedium reflektierten Pulse gemessen wird. Somit kann über die Ausbreitungsgeschwindigkeit der elektromagnetischen Welle der Abstand zwischen Auswerteeinheit und Störstelle sowie zwischen Störstelle und Messmedium ermittelt werden. Als besonders günstig für die vorliegende Erfindung hat sich der TM₀₁-Mode herausgestellt.

Die Störstelle ist vorzugsweise als eine Öffnung, eine Einkerbung, eine Erhebung oder eine Blende im Hohlleiter ausgebildet, deren Form und Größe von den Dimensionen des Hohlleiters, vom gewählten Ausbreitungsmode und vom angestrebten Reflexionsfaktor abhängt. Alternativ können die Störstellen auch als Beschichtung aufgebildet sein, welche die Wellenleififähigkeit des Hohlleiters und damit den Reflexionsfaktor an der Störstelle variiert.

Um in besonders einfacher Weise sicherstellen zu können, dass immer mindestens eine Störstelle zwischen der Oberfläche des Messmediums und der Auswerteeinheit liegt, ist es bevorzugt, dass mehrere Störstellen vorgesehen sind, die auch unterschiedliche Formen aufweisen können und/oder verschiedenen der vorstehend beschriebenen Typen angehören.

Das erfindungsgemäße Messsystem ist besonders vielseitig einsetzbar und an die unterschiedlichsten Gegebenheiten anzupassen, wenn die Länge des Hohlleiters verändert werden kann, was insbesondere durch dessen teleskopartige Ausgestaltung erreicht werden kann. Die Vielseitigkeit und Flexibilität wird noch weiter erhöht, wenn der Sender, der Empfänger und die Auswerteeinheit zu einem Messkopf integriert sind, der lösbar an demjenigen Ende des Hohlleiters befestigt werden kann, das vom Messmedium abgewandt ist.

Die vorliegende Erfindung findet bevorzugt ihre Anwendung in einem Pegelmessgerät für eine Flüssigkeit, in einem Füllstandsmessgerät für Schüttgut, einem Messgerät zur Erfassung der Lage und Dicke einer Flüssigkeit wie beispielsweise Öl, die auf einer anderen Flüssigkeit wie beispielsweise Wasser schwimmt. Die Erfindung kann auch in vorteilhafter Weise bei einem Abstandsmessgerät zum Messen des Abstands bis zu einem Messmedium oder als Positionsmessgerät für die Position eines Kolbens eingesetzt werden, wobei in diesen Fällen der Hohlleiter längenveränderlich sein muss,

Weitere Vorteile, Merkmale und Besonderheiten der Erfindung ergeben sich aus der nachfolgenden Beschreibung bevorzugter, jedoch nicht beschränkender Ausführungsformen der Erfindung anhand der schematischen und nicht maßstabsgetreuen Zeichnung. Es zeigen:
Fig. 1 eine vorteilhafte Ausführungsform eines erfindungsgemäßen Messsystems, das als Pegelmessgerät für eine Flüssigkeit ausgebildet ist,
Fig. 2a bis 2e unterschiedliche Ausgestaltungen einer Störstelle, wie sie bei der vorliegenden Erfindung verwendet wird,
Fig. 3 eine zweite vorteilhafte Ausführungsform des erfindungsgemäßen Messsystems, das als Füllstandsmessgerät für Schüttgut aufgebildet ist,
Fig. 4 eine dritte vorteilhafte Ausführungsform des erfindungsgemäßen Messsystems, das als Messgerät zur Erfassung getrennter Flüssigkeitsschichten ausgebildet ist,
Fig. 5a und Fig. 5b eine vierte vorteilhafte Ausführungsform des erfindungsgemäßen Messsystems, das als Abstandsmessgerät zur Messung des Abstands bis zu einem Messmedium ausgebildet ist, in zwei verschiedenen Arbeitsstellungen und
Fig. 6 eine fünfte vorteilhafte Ausführungsform des erfindungsgemäßen Messsystems, das als Positionsmessgerät für die Position eines in einem Zylinder bewegbaren Kolbens ausgebildet ist.

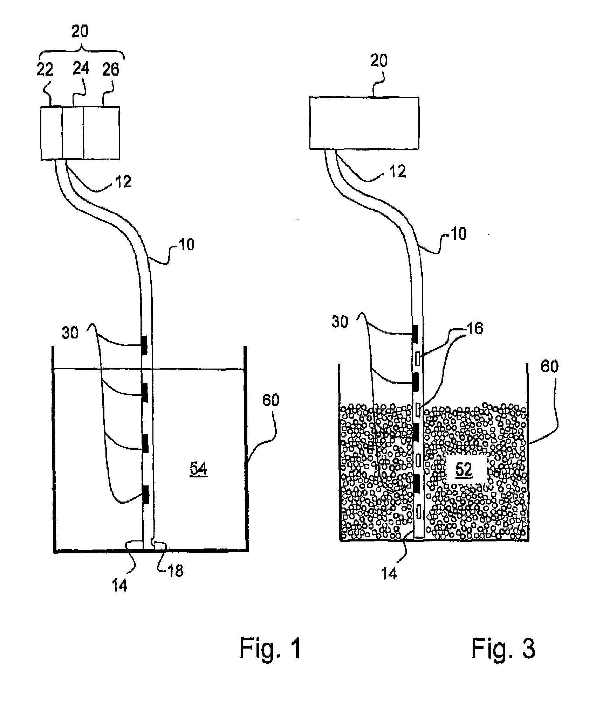

Fig. 1 zeigt als erste vorteilhafte Ausführungsform eine Ausgestaltung des erfindungsgemäßen Messsystems als Pegelmessgerät für eine Flüssigkeit 54. Ein Sender 22 und ein Empfänger 24 für Mikrowellen sind zusammen mit einer entsprechenden Auswerteeinheit 26 zu einem Messkopf 20 integriert, der auf ein erstes Ende 12 eines Hohlleiters 10 für Mikrowellen lösbar aufgesetzt ist. Nachfolgend wird durchgehend davon ausgegangen, dass Mikrowellen für die Abstandsmessung beim erfindungsgemäßen Messsystem eingesetzt werden. Es können jedoch auch andere Frequenzen von elektromagnetischen Wellen verwendet werden, falls sich dies für die jeweiligen Umstände der Messung anbietet. Das zweite Ende 14 der Hohlleiters 10 taucht in ein Gefäß 60 ein, in dem sich die Flüssigkeit 54 befindet, deren Pegel zu messen ist.

Im Bereich dieses unteren Endes 14, das sich in einer definierten Position befinden muss, befindet sich seitlich eine Einlassöffnung 18 zum Einlass der Flüssigkeit 54 in das Innere des Hohlleiters 10. Selbstverständlich kann der Hohlleiter 10 statt einer seitlich eingeordneten Einlassöffnung 18 auch einfach an seinem unteren Ende 14 offen sein. Im Inneren des Hohlleiters 10 befindet sich mindestens eine Störstelle 30, wobei in dieser Ausführungsform vier Störstellen 30 vorgesehen sind.

Zur Messung des Pegels der Flüssigkeit 54 strahlt der Sender 22 modulierte, insbesondere frequenz- oder pulsmodulierte, Mikrowellen in den Hohlleiter 10, die sich in dem Hohlleiter 10 nach unten zum zweiten Ende 14 hin ausbreiten. In dem Hohlleiter 10 können auch Längsschlitze zur Entlüftung und/oder Modenbereinigung vorgesehen sein, die jedoch nicht zeichnerisch dargestellt sind. So eignen sich beispielsweise axiale Schlitze besonders gut dafür, nur den Grundmode wie vorzugsweise den TM₀₁-Mode durchzulassen und alle anderen Moden zu eliminieren.

Erfindungsgemäß sind die Störstellen 30 so ausgebildet, dass von der Gesamtwelle I ein wohldefinierter Anteil R der vom Sender 22 kommenden Mikrowelle zum Empfänger 24 zurückreflektiert wird und der Rest T der Mikrowelle transmittiert wird und im Hohlleiter 10 in Richtung zu dessen zweitem Ende 14 weiterläuft. Der zum Empfänger 24 von der Störstelle 30 zurückreflektierte Anteil R dient diesem dabei als Referenzsignal bzw. Referenzmarke. Der zur Oberfläche der Flüssigkeit 54 weiterlaufende Anteil T der Mikrowelle läuft bis zur Oberfläche der Flüssigkeit 54 weiter und wird dort größtenteils reflektiert und zum Empfänger zurückgeleitet, wo er ein Messsignal erzeugt. An einer Grenzfläche Luft/Wasser beispielsweise ist ein Reflexionsfaktor von etwa 70 % zu erwarten. Durch Vergleich des Referenzsignals mit dem Messsignal kann die Auswerteeinheit 26 den Abstand zwischen der Störstelle 30 und der Oberfläche der Flüssigkeit und damit auch - da der Abstand der Störstelle 30 vom Messkopf 20 bekannt ist - den Abstand der Oberfläche der Flüssigkeit 54 vom Messkopf 20 bestimmen.

Als Hohlleiter 10 wird vorzugsweise ein Rohr mit rundem Querschnitt verwendet, es können jedoch auch andere Querschnitte wie rechteckige oder ovale verwendet werden, sofern sie sich für die jeweilige Messsituation eignen. Der Hohlleiter kann auch aus mehreren Sektionen gebildet sein, die beispielsweise durch Muffen miteinander verbunden sind. Besonders bevorzugt ist ein Hohlleiter auf flexiblem Material, der auch mit Krümmungen versehen werden kann. Wenn beispielsweise ein Durchmesser von 6 cm des Hohlleiters verwendet wird, ergibt sich für diesen eine Betriebsfrequenz von 5,8 GHz. Für diese Konfiguration (oder auch z.B. für 24,125 GHz) sind bereits auf dem Markt alle Bauelemente vorhanden, somit kann ein derartiges Messsystem kostengünstig realisiert werden. Falls eine Phasenmessung zwischen dem Referenzsignal und dem Messsignal durchgeführt wird, können Genauigkeiten im Millimeterbereich und darunter erreicht werden. Bei der in Fig. 1 dargestellten Messsituation, bei der sich die Oberfläche der Flüssigkeit 54 zwischen den beiden obersten Störstellen 30 befindet, wird nur ein Referenzsignal von der obersten Störstelle und ein Messsignal von der Oberfläche der Flüssigkeit 54 erzeugt. Falls die Oberfläche der Flüssigkeit 54 tiefer liegt und beispielsweise zwei oder drei Störstellen 30 frei liegen, erzeugt jede der Störstellen 30 ein entsprechendes Referenzsignal, was der Auswertung in der Auswerteeinheit 26 jedoch keine Probleme bereitet.

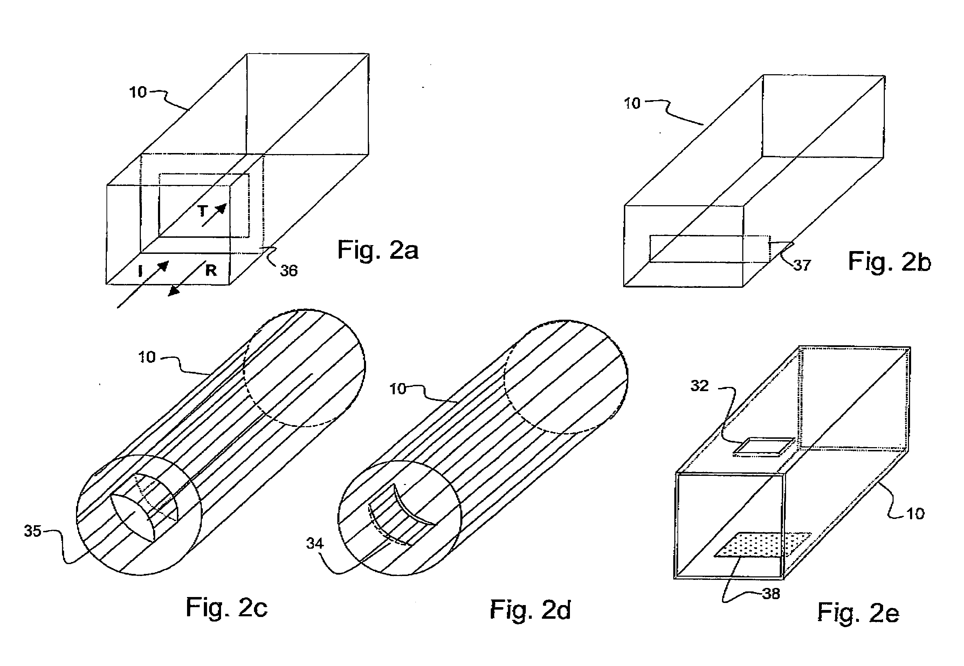

In Fig. 2a - Fig. 2e sind verschiedene Arten dargestellt, wie die Störstellen 30 für das erfindungsgemäße System ausgebildet sein können. In Fig. 2a ist ein rechteckiger Hohlleiter 10 dargestellt, bei dem die Störstelle als ringförmige Blende 36 ausgebildet ist, die in der Mitte offen und somit durchgängig ist, Die Gesamtwelle 1, der reflektierte Anteil R und der transmittierte Anteil T sind mit entsprechend bezeichneten Pfeilen symbolisch dargestellt, Bei der in Fig. 2b dargestellten Form ist die Störstelle als stufenförmige Blende 37 dargestellt, die etwa das untere Drittel des Hohlleiters abschirmt. Für diese Konfiguration ergibt sich beispielsweise ein Reflexionsanteil von ca. 20 %. In Fig. 2c ist am Beispiel eines Hohlleiters 10 mit rundem Querschnitt eine als Erhebung 35 ausgebildete Störstelle dargestellt, während Fig. 2d eine als Einkerbung 34 ausgeformte Störstelle zeigt. In Fig. 2e ist am Beispiel eines Hohlleiters 10 mit quadratischem Querschnitt an dessen Oberseite eine Öffnung 32 dargestellt, die - ebenso wie die vorstehend beschriebenen Varianten - durch einen geometrischen Eingriff in den Hohlleiter 10 als Störstelle wirkt. Am Boden des Hohlleiters 10 dagegen ist eine als Störstelle wirkende Beschichtung 38 aufgetragen, die beispielsweise aus Kunststoff oder aber auch einem Metall hergestellt ist, das andere Wellenleitungseigenschaften aufweist als der Hohlleiter 10 und somit zu einer Reflexion eines Teils der geführten Mikrowelle führt, Selbstverständlich ist die Erfindung nicht auf die dargestellten Ausgestaltungen der Störstellen beschränkt.

Die in Verbindung mit den Fig. 1 und 2a bis 2e beschriebenen Eigenschaften und Funktionsweisen des Messsystems und der Störstellen gelten auch für die nachfolgend beschriebenen Ausführungsformen, sofern nicht Abweichendes dargelegt ist.

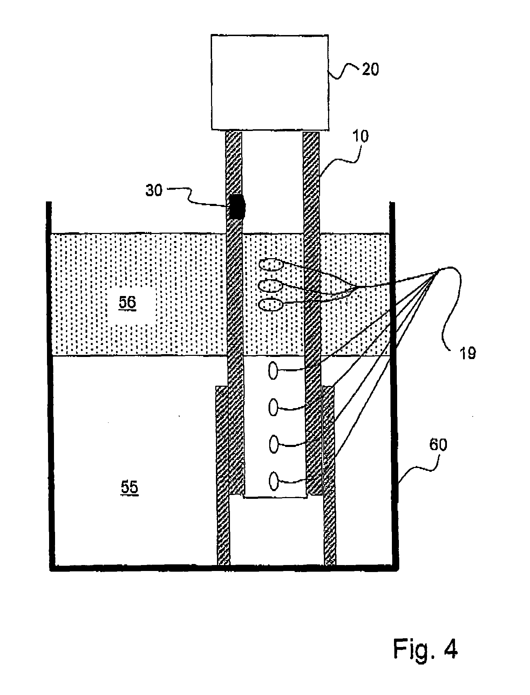

Fig. 3 zeigt eine zweite vorteilhafte Ausführungsform der Erfindung, bei der das Messsystem als Füllstandsmessgerät für in einem Behälter 60 befindliches Schüttgut 52 ausgestaltet ist. Im Unterschied zur ersten Ausführungsform tritt das Schüttgut 52 nicht in das Innere des Hohlleiters 10 ein, sondern befindet sich in dessen Außenbereich. Daher sind im Hohlleiter 10 mehrere Koppelschlitze 16 vorgesehen, über die das Mikrowellensignal mit der Hohlleiterumgebung verkoppelt ist. Abhängig davon, ob die Umgebung Luft oder das zu messende Schüttgut 52 ist, wird ein unterschiedliches Reflexionssignal als Messsignal geliefert, das in der Auswerteeinheit zur Ermittlung des Füllstands ausgewertet werden kann. Wie bei der ersten Ausführungsform wird ein Referenzsignal oder mehrere Referenzsignale durch Reflexionen an den entsprechenden Störstellen 30 erzeugt und zur Ermittlung des Füllstands herangezogen.

Fig. 4 zeigt eine dritte vorteilhafte Ausführungsform der Erfindung in Gestalt eines Messgeräts, das die Lage und die Dicke einer auf einer weiteren Flüssigkeit schwimmenden Flüssigkeitsschicht erfassen kann. Im Behälter 60 befindet sich am Boden eine Wasserschicht 55, auf der eine Ölschicht 56 schwimmt. Der Hohlleiter 10, auf dem der Messkopf 20 angeordnet ist, ist hier teleskopisch ausgestaltet, so dass er hinsichtlich des Messbereichs flexibler ausgestaltet ist. In dem Hohlleiter 10 ist eine Mehrzahl von Einlassöffnungen 19 vorgesehen, deren Lage und Anzahl hier nur exemplarisch dargestellt ist und durch die die jeweiligen Flüssigkeiten in den Hohlleiter 10 eintreten können. Das Messprinzip erfolgt bei dieser Ausführungsform so, dass neben der Reflexion an der Störstelle 30 eine erste Reflexion an der Oberfläche des Öls 56 stattfindet und zu einem ersten Messsignal führt. Es wird jedoch nicht die gesamte an der Öloberfläche ankommende Mikrowelle reflektiert, sondern ein Teil tritt durch die Ölschicht 56 hindurch und wird erst an der Grenzfläche zur Wasserschicht 55 zum Messkopf 20 zurückreflektiert und ergibt ein zweites Messsignal. Durch Auswertung dieser beiden Messsignale unter Bezugnahme auf das Referenzsignal von der Störstelle 30 kann sowohl die Lage als auch die Dicke der Ölschicht 56 bestimmt werden. Es ist klar, dass mit diesem Messprinzip auch die Lage und Dicke mehrerer Flüssigkeitsschichten und nicht nur einer Flüssigkeitsschicht ermittelt werden kann, wobei je nach den zu erfassenden Stoffen eine Anpassung der eingesetzten Mikrowellenfrequenz und/oder Ausgestaltung der Störstelle etc. erforderlich sein kann,

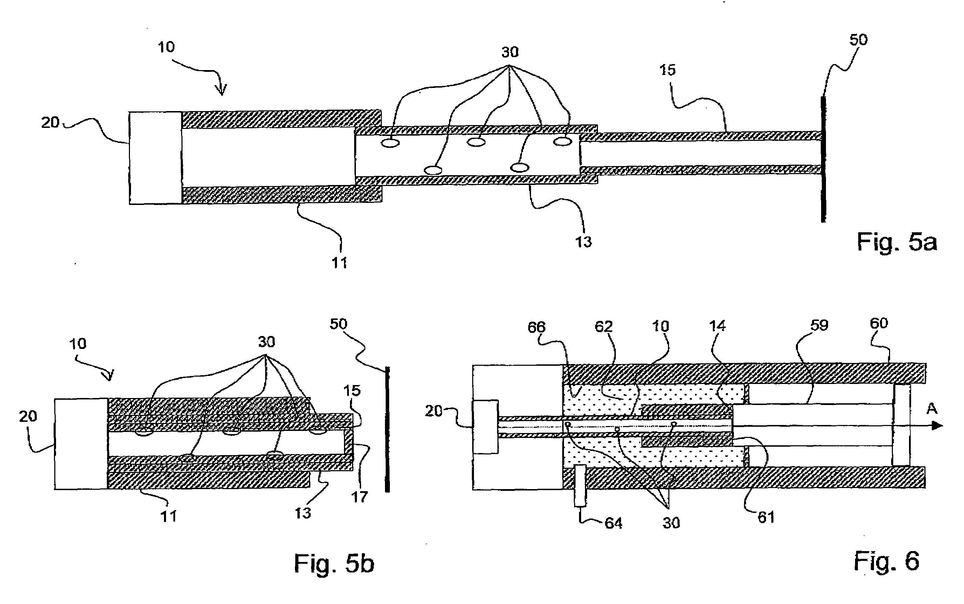

In den Fig. 5a und 5b ist eine vierte vorteilhafte Ausführungsform der Erfindung dargestellt. Das erfindungsgemäße System umfasst einen Hohlleiter 10, der drei Abschnitte 11, 13, 15 umfasst, die teleskopisch ineinanderschiebbar sind. Der mit dem Messkopf 20 versehene Abschnitt 11 des Hohlleiters 10 befindet sich dabei einer definierten Lage, und die beiden anderen Abschnitte 13 und 15 können aus der in Fig. 5b dargestellten eingefahrenen Stellung soweit ausgefahren werden, bis der Abschnitt 15 auf das Messmedium 50 - beispielsweise eine Fläche, deren Abstand zu ermitteln ist - trifft. Sobald die für das Ausfahren der Abschnitte 13 und 15 zuständige (nicht eigens dargestellte) Sensorik erkennt, dass der Abschnitt 15 an dem Messmedium 50 anliegt (vgl. Fig. 5a), wird eine Messung durch Aussendung von Mikrowellen und anschließender Auswertung der Reflexionen an der Störstelle 30 und am Messmedium 50 ausgeführt Dies funktioniert gut, wenn das Messmedium 50 beispielsweise eine plane Fläche ist und eine klar definierte Reflexion an diesem Messmedium stattfindet. Wenn das Messmedium 50 dagegen beispielsweise rau ist und die Reflexion der aus dem Abschnitt 15 kommenden Mikrowellen an ihm nicht genau definiert ist, kann der Abschnitt 15 alternativ an seinem das zweite Ende 14 des Hohlleiters 10 bildenden Ende durch einen Boden 17 verschlossen sein, an dem dann die Reflexion erfolgt. Es ist festzuhalten, dass sich u.a. bei dieser Ausführungsform der Durchmesser des Hohlleiters 10 problemlos auf deutlich unter 10 mm reduzieren lässt, wobei dann Mikrowellenfrequenzen im Bereich von beispielsweise 60 GHz zum Einsatz kommen.

In Fig. 6 ist eine fünfte vorteilhafte Ausführungsform der Erfindung dargestellt, bei der das Messsystem als Positionsmessgerät für die Position eines Kolbens 59 ausgestaltet ist. Der Kolben 59 kann sich in einem Zylinder 60 durch Betätigung eines Hydraulikfluids 62 wie beispielsweise Hydrauliköl bewegen, das über einen Hydraulikanschluss 64 eingeführt oder entnommen wird. In demjenigen Teil 66 des Zylinders 60, in dem sich das Hydrauliköl 62 befindet, ist ein teleskopisch ausziehbarer Hohlleiter 10 angeordnet, dessen zweites Ende 14 mit einem ersten Ende 61 des Kolbens 60 verbunden ist. Bei Bewegung des Kolbens ändert sich damit auch die Länge des Hohlleiters 10 und ergibt damit ein entsprechendes Reflexionssignal, das im Vergleich mit den Referenzsignalen von den Störstellen 30 zur Ermittlung der exakten Position des Kolbens 59 ausgewertet werden kann. Selbstverständlich kann diese Ausführungsform so abgewandelt werden, dass der Hohlleiter 10 an einem beliebigen beweglichen Element, dessen Position innerhalb eines bestimmten, durch die Ausziehbarkeit des Hohlleiters 10 definierten Bereichs erfasst werden soll, befestigt ist.

Die vorstehend beschriebenen Ausführungsformen des erfindungsgemäßen Messsystems können jeweils als autonome Einheiten betrieben und autark verwaltet werden. Die elektrische Versorgung kann dabei herkömmlich über das Stromnetz, jedoch auch über Solaranlagen erfolgen. Die Übermittlung der durch das Messsystem gewonnenen Daten kann in vielfältiger Weise erfolgen, beispielsweise drahtlos über satellitengestützte Systeme wie GALILEO, GPS, GSM oder UMTS oder auch über das Festnetz. Die einzelnen mit dem erfindungsgemäßen Messsystem ausgestatteten Messstellen können über Draht oder aber auch drahtlos wie beispielsweise über W-LAN verwaltet werden. Die Datenaufzeichnung, das sogenannte Logging, kann dabei im jeweiligen System vor Ort oder auch zentral erfolgen.

Die erfindungsgemäßen Messsysteme sind entweder fest installiert oder als mobile Einheiten ausgestaltet. So kann beispielsweise eine entsprechende Einheit aus einem Messkopf und einem Hohlleiter auf ein vorhandenes Rohr aufgesetzt werden und anschließend, nach Kalibrierung vor Ort, eine Tiefenmessung vorgenommen werden.

Es ist festzuhalten, dass die unter Bezug auf einzelne Ausführungsformen beschriebenen Merkmale der Erfindung, wie beispielsweise die Ausgestaltung der Störstellen oder die relative Anordnung des Hohlleiters relativ zum Messmedium, auch bei anderen Ausführungsformen vorhanden sein können.

## Patentansprüche

1. Messsystem zur Messung des Abstands bis zu einem Messmedium (50; 52; 54; 55, 56; 58; 59), umfassend:
einen ein erstes Ende (12) und ein zweites Ende (14) aufweisenden Hohlleiter (10) zum Führen von elektromagnetischen Wellen bis zu dem Messmedium (50; 52; 54; 55, 56; 58; 59),
einen am ersten Ende (12) anbringbaren Sender (22) zum Aussenden einer modulierten elektromagnetischen Welle (I) in den Hohlleiter (10),
einen am ersten Ende (12) anbringbaren Empfänger (24) zum Empfangen von aus dem Hohlleiter (10) kommenden elektromagnetischen Wellen, und
eine mit dem Empfänger (24) verbundene Auswerteeinheit (26) zum Ermitteln des Abstands bis zu dem Messmedium (50; 52; 54; 55, 56; 58; 59),
**dadurch gekennzeichnet, dass**
in dem Hohlleiter (10) eine Störstelle (30) vorgesehen ist, die einen definierten Anteil (R) der im Hohlleiter (10) geführten elektromagnetischen Welle (I) zum Empfänger (24) zurück reflektiert, und
die Auswerteeinheit (26) dafür ausgebildet ist, den Abstand bis zu dem Messmedium (50; 52; 54; 55, 56; 58; 59) durch Vergleich der von der Störstelle (30) reflektierten elektromagnetischen Welle (R) und der vom Messmedium (50; 52; 54; 55, 56; 58; 59) reflektierten elektromagnetischen Welle zu ermitteln.

2. Messsystem nach Anspruch 1,
**dadurch gekennzeichnet, dass** die Störstelle (30) als Öffnung (32), Einkerbung (34), Erhebung (35) oder Blende (36, 37) im Hohlleiter (10) oder als die Wellenleitfähigkeit des Hohlleiters (10) ändernde Beschichtung (38) ausgebildet ist.

3. Messsystem nach Anspruch 1 oder 2,
**dadurch gekennzeichnet, dass** es mehrere, vorzugsweise unterschiedlich ausgebildete, Störstellen (30, 32, 34, 35, 36, 37, 38, 39), aufweist.

4. Messsystem nach einem der vorhergehenden Ansprüche,
**dadurch gekennzeichnet, dass** der Hohlleiter (10) hinsichtlich seiner Länge veränderbar, insbesondere teleskopisch, ausgebildet ist.

5. Messsystem nach einem der vorhergehenden Ansprüche,
**dadurch gekennzeichnet, dass** der Sender (22), der Empfänger (24) und die Auswerteeinheit (26) als integrierter Messkopf (20) ausgebildet sind, der lösbar am ersten Ende (12) des Hohlleiters (10) befestigbar ist.

6. Messsystem nach einem der Ansprüche 1 bis 5, **dadurch gekennzeichnet, dass**
es als Pegelmessgerät für eine Flüssigkeit (54) ausgebildet ist und der Hohlleiter (10) eine Einlassöffnung (18) für den Einlass der Flüssigkeit (54) in das Innere des Hohlleiters (10) aufweist.

7. Messsystem nach einem der Ansprüche 1 bis 5, **dadurch gekennzeichnet, dass**
es als Füllstandsmessgerät für Schüttgut (52) ausgebildet ist und der Hohlleiter (10) mehrere Koppelschlitze (16) zum Verkoppeln der im Hohlleiter (10) geführten elektromagnetischen Welle mit dem Außenbereich des Hohlleiters (10) aufweist.

8. Messsystem nach einem der Ansprüche 1 bis 5, **dadurch gekennzeichnet, dass**
es als Messgerät zur Erfassung der Lage und Dicke einer auf einer ersten Flüssigkeit (55) schwimmenden zweiten Flüssigkeit (56) und gegebenenfalls weiterer darauf schwimmender Flüssigkeiten ausgebildet ist und der Hohlleiter (10) eine Vielzahl von in Ausbreitungsrichtung der elektromagnetischen Welle beabstandeten Einlassöffnungen (19) für den Einlass der jeweiligen Flüssigkeiten (55, 56) in das Innere des Hohlleiters (10) aufweist.

9. Messsystem nach Anspruch 4, **dadurch gekennzeichnet, dass**
es als Abstandsmessgerät zur Messung des Abstands bis zum Messmedium (58) ausgebildet ist, wobei der Hohlleiter (10) bis zum Messmedium (58) ausziehbar ausgebildet und vorzugsweise an seinem zweiten Ende (14) verschlossen ist.

10. Messsystem nach Anspruch 4, **dadurch gekennzeichnet, dass**
es als Positionsmessgerät für die Position eines mittels eines Hydraulikfluids (62) in einem Zylinder (60) bewegbaren Kolbens (59) ausgebildet ist, wobei der Hohlleiter (10) innerhalb des Zylinders (60) in dessen das Hydraulikfluid (62) enthaltendem Teil (66) angeordnet und mit seinem zweiten Ende (14) mit dem Kolben (60) verbunden ist.
